# EUROPEAN PATENT SPECIFICATION

(11) **EP 2 115 318 B1**
(45) Date of publication and mention of the grant of the patent: **20.04.2016**
(21) Application number: 08705117.3
(22) Date of filing: 28.01.2008
(51) Int. Cl.: F16G 5/16

(54) **DRIVE BELT**
ANTRIEBSRIEMEN
COURROIE D'ENTRAÎNEMENT

(30) Priority: 31.01.2007 NL 1033311
(43) Date of publication of application: 11.11.2009
(73) Proprietor: Robert Bosch GmbH, 70442 Stuttgart (DE)
(72) Inventor: BRANDSMA, Arjen, NL-5045 WN Tilburg (NL); CREBOLDER, Cornelia, Adriana, Elizabeth, NL-4708 NN Roosendaal (NL); MUTSAERS, Bas, Adrianus, Maria, NL-5043 NB Tilburg (NL); PENNINGS, Bert, NL-5052 CH Goirle (NL); VAN TILBORG, Pieter, Gerard, NL-5021 DD Tilburg (NL); VERHOEVEN, Peter, NL-5345 DJ Oss (NL); DAMKOT, Dènis, NL-5685 GW Best (NL)
(74) Representative: Plevier, Gabriel Anton Johan Maria
(86) International application number: PCT/NL2008/050048
(87) International publication number: WO 2008/094035

(56) References cited:
- EP-A- 1 258 652
- EP-A2- 1 217 254
- FR-A- 1 097 864
- FR-A- 2 224 021
- FR-A1- 2 515 296
- GB-A- 1 549 403
- JP-A- 10 159 910
- JP-A- 11 125 316
- JP-A- 2003 222 197
- US-A- 4 213 350
- US-A- 4 541 822
- US-A- 4 552 550

## Description

The present invention relates to the drive belt according to the preamble of Claim 1 below. Such a drive belt is generally used for the transmission of a driving power between two shafts in a drive line, the drive belt being passed around two or more rotating pulleys and being clamped between them. A generally known use of such a transmission is the continuously variable transmission for 2-wheeled motor vehicles such as, for example, scooters. Such drive betts are known from documents FR1097864 A1 and US 4 541 822 A.

A continuous aim in the technological development of the known drive belt is for such a belt to be suitable for the transmission of ever-increasing power, or at least a constant engine power for a fairly long period of operation. More particularly, such an aim amounts to achieving an increase in the tensile and/or fatigue strength of the drive belt, and also an increase in the resistance to wear of particularly the lateral side faces or running faces of the belt, which are intended for frictional contact with the pulleys. It is also important here to limit any loss of power of the transmission as much as possible, not only in order to improve its efficiency, but also in order to reduce the thermal load on the drive belt in particular, this load occurring through the development of heat as a result of friction losses. All this should preferably be achieved in such a way that air cooling as opposed to cooling with a recirculating liquid medium will suffice.

It is a fundamental object of the present invention to provide a new design of drive belt which provides one or more of the generally desired technological developments described above. To that end, the invention provides a number of solutions for achieving the basic principle, which are set out in the appended claims and are described in greater detail below with reference to the accompanying figures.
Figure 1 shows diagrammatically a cross section of a continuously variable transmission provided with two pulleys and a drive belt according to the prior art.
Figure 2 illustrates a first, diagrammatically shown example of the known drive belt.
Figure 3 illustrates a second, diagrammatically shown example of the known drive belt.
Figures 4A and 4B each illustrate two diagrammatically shown cross sections of an embodiment of the basic principle of the drive belt according to the present invention.
Figure 5 shows a diagrammatically illustrated cross section of yet another embodiment of the drive belt according to the present invention, viewed in the tangential direction.
Figure 6 shows two diagrammatically illustrated cross sections of a further embodiment of the drive belt according to the present invention.
Figures 7 to 14 each show a diagrammatically illustrated cross section, viewed in the tangential direction, of possible mutually differing embodiments of the drive belt according to the present invention.
Figure 15 shows a detail of a transverse element according to the invention in a simplified perspective.
Figure 16 shows a diagrammatically illustrated cross section, viewed in the axial direction, of yet another embodiment of the drive belt according to the present invention.

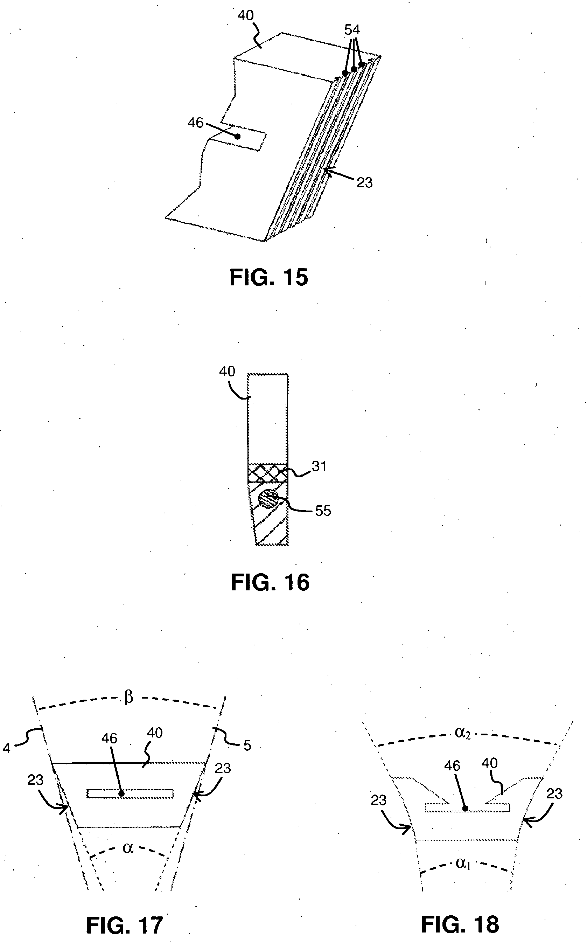

Finally, Figures 17 and 18 each show a simplified front view of a transverse element of the drive belt according to the invention.

Identical or similar structural parts of the drive belt are indicated by the same reference numerals in each case in the figures.

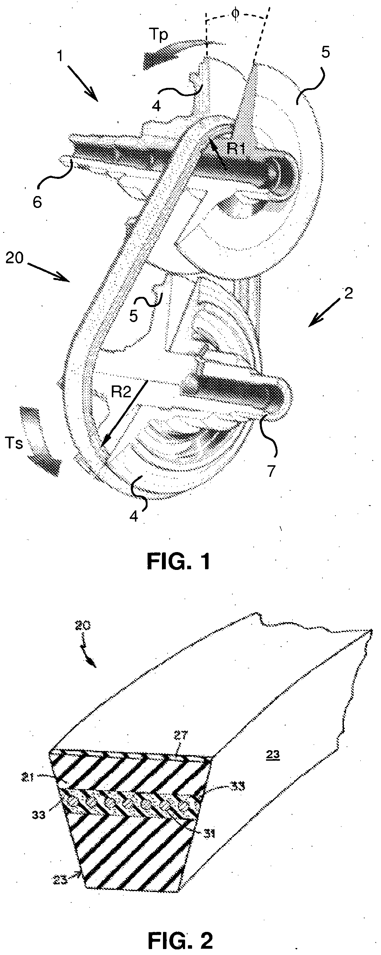

Figure 1 shows diagrammatically a cross section of a continuously variable transmission according to the prior art. The known transmission comprises a primary pulley 1 which can be driven by a motor (not shown) with a power torque Tp, and comprises a secondary pulley 2 which can drive a load (not shown) with power torque Ts. The two pulleys 1 and 2 are provided with a pulley sheave 5 immovably fixed on the respective pulley shaft 6, 7 and with a pulley sheave 4 which is axially movable relative to said respective shafts 6, 7. A drive belt 20 is clamped between the pulley sheaves 4, 5, so that mechanical power can be transmitted between the two shafts 6 and 7 by means of friction.

The transmission ratio Rs/Rp of the transmission is determined by the ratio between a secondary running radius Rs and a primary running radius Rp of the drive belt 20, in other words the effective radial position thereof between the pulley sheaves 4, 5 of the respective pulleys 1 and 2. The abovementioned running radii Rp and Rs, and consequently the transmission ratio Rs/Rp of the transmission defined according to the invention, can be varied by making the movable sheaves 4 move in an axial direction opposite to each other along the respective pulley shaft 6, 7. In Figure 1 the transmission is illustrated by way of example with a low transmission ratio Rs/Rp, in other words with a relatively large primary running radius Rp and a relatively small secondary running radius Rs.

Figure 2 shows in cross section a first example of the known drive belt 20, which drive belt 20 is disclosed in, for example, European patent specification EP-A-1 217 254. The known drive belt 20 is provided with a self-contained tension element 31, which is composed of a number of pulling cords 31 embedded in a support 33. Provided on the radial inside and outside of the support 33 is a circumferential element with a substantially V-shaped cross section, i.e. a supporting element 21 provided with two largely axially directed, mutually radially outwardly diverging lateral side faces 23 intended for frictional contact with the pulley sheaves 4, 5, which likewise diverge radially outwards with an angle ϕ between them (see Figure 1). On the outermost radial outside of the drive belt 20, said drive belt is provided with a relatively stiff covering layer 27, which covers the supporting element 21. The covering layer 27 prevents the supporting element 21 from bulging excessively in the radial direction under the influence of the clamping force exerted upon the drive belt 20 by the pulley sheaves 4, 5.

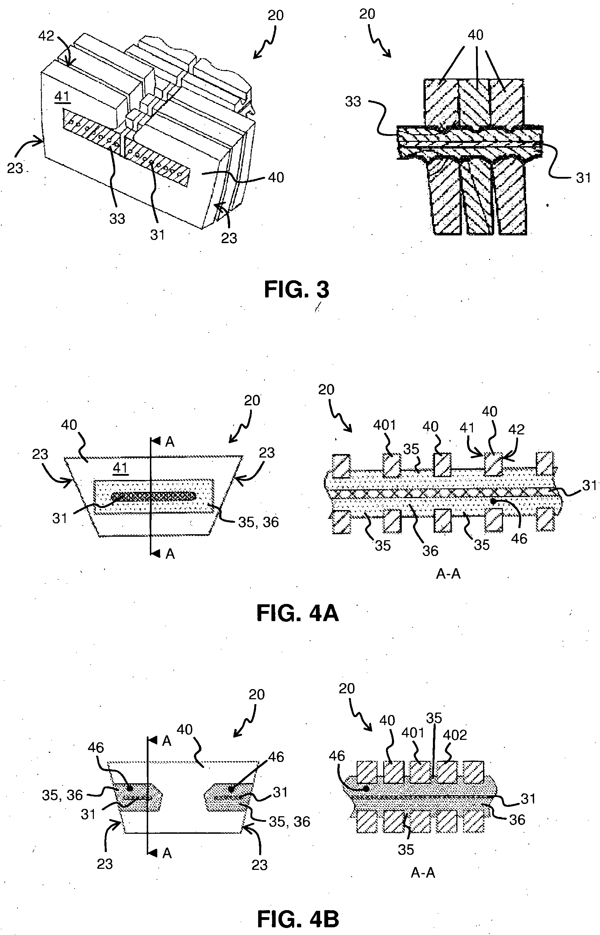

As shown in Figure 3, in a side view in cross section of a second example of the known drive belt 20 disclosed in Japanese patent application JP-A-2003/222197, it is also known to use discrete, so-called transverse elements 40 in the drive belt 20, instead of the continuous supporting element 21. These transverse elements 40 absorb the abovementioned clamping force and provide the frictional contact with the pulley sheaves 4, 5.

In both of the abovementioned cases, the forces, or force components, acting upon the supporting element 21 and the transverse elements 40 respectively in the radial and tangential or circumferential direction are transferred by way of the respective support 33 to the tension element 31, which is consequently subjected to a varying tensile stress. The tension element 31 is also subjected to a varying bending stress through the fact that said tension element is alternately bent and stretched again during rotation thereof around and between the pulleys 1, 2 of the transmission.

The present invention provides a number of new versions of the abovementioned known drive belt types, or at any rate design aspects of said belt types, for which in particular the possibility of providing the drive belt 20 with great stiffness, both in the tangential or circumferential direction and in the axial or transverse direction thereof, was a point of departure. According to the invention, it is particularly by increasing the abovementioned stiffnesses that the load-bearing capacity of the drive belt 20 can be considerably improved. This last design aspect is achieved in all of the embodiments of the basic principle of the drive belt according to the invention to be discussed below, and at least in the tangential direction, by using a flat, thin or substantially ribbon-shaped ring as the tension element 25. The tension element here is made of a stiff, strong material, preferably a metal, more particularly an iron alloy such as spring steel or maraging steel. In particular, if metal is used for it, the tension element 25 is preferably provided with, i.e. completely enclosed by, a corrosion-resistant covering layer, such as a metal oxide skin, a DLC (diamond-like carbon) coating, a Teflon coating or, for example, a casing or intermediate element 36 (see below with reference to Figures 4A and 4B) which is at least largely made of plastic, preferably an elastomeric plastic. According to the invention, at least one of the two substantially radially directed main sides of the tension element 25 is preferably provided here with a surface profile which comprises, for example, a number of preferably substantially axially directed grooves. This will advantageously influence, i.e. reinforce, a bonding between the tension element 25 and the covering layer, on the one hand because in this way the surface available for an adhesive bonding has been increased and, on the other hand, because the bonding then at least contributes towards also achieving a mutual engagement or interlocking of the tension element 25 and the covering layer.

Apart from the abovementioned annular tension element 25, all of the embodiments of the drive belt 20 according to the invention discussed below have a greater or lesser number of the abovementioned discrete transverse elements 40. The transverse elements 40 are in each case provided with two main faces 41 and 42 which are directed substantially in the circumferential direction of the drive belt, which main faces 41, 42 are situated at a relatively short mutual distance of approximately 1 to 2 mm relative to the circumference of the drive belt 20, which distance determines the thickness of the transverse element 40. The transverse elements 40 are furthermore provided in each case with two largely axially directed and mutually radially outwardly diverging side faces or running faces 23 intended for frictional contact with the pulley sheaves 4, 5.

In the drive belt 20, according to the invention, the transverse element 40 is preferably or substantially made of plastic, more particularly a glassfibre-reinforced or carbon-reinforced polyamide. It is advantageous here, according to the invention, for at least the abovementioned running faces 23 of the transverse element 40 to be provided with a wear-resistant and/or traction-increasing covering layer, preferably likewise made of plastic or a plastic composite.

A first embodiment of the principle of the invention is illustrated in Figures 4A and 4B with reference to diagrammatically shown cross sections of the drive belt 20 according to the invention, viewed in the tangential direction and in the axial direction. The drive belt 20, according to the invention, from Figure 4A comprises a number of spacers 35, one of which is fitted between two adjacent transverse elements 401 and 402 in each case. An advantageous aspect of this is that the transverse elements 40 are not in direct contact with each other, with the result that said transverse elements are less susceptible to wear, and furthermore with the result that a number of measurement tolerances which the transverse elements 40 have to meet, such as the flatness of their main faces 41, 42, can be more generous.

The spacers 35 can be part of the tension element 31 here, i.e. they can be formed integrally with it, for example as a local radial protuberance or thickening of it (not shown). Such spacers also serve to fix together the tension element 25 and the transverse elements 40 in the circumferential direction, so that a pushing force can be transmitted between them in that direction. An alternative is, however, for the spacers 35 to be fitted around the tension element 31 as a separate component of the drive belt 20, as shown in Figure 4A, preferably to be affixed adhesively to it.

The axial width dimension of the spacers 35 in this case is preferably less than that of the transverse elements 40 here, so that the former do not come into contact with pulley sheaves 4, 5 and can therefore be made of a softer or more flexible material than that of the transverse elements 40. The spacers 35 are also preferably fixed to the tension element 31, so that a pulling force can be transmitted between the tension element 31 and the transverse elements 40 in the circumferential direction. The spacers 35 here preferably form part of an intermediate element 36 which completely surrounds, i.e. encloses, the tension element 31 and possibly also the transverse elements 40 (not shown). In this case the spacers 35 can then be in the form of local radial protuberances or thickenings of the intermediate element 36, as shown diagrammatically in the axial cross section of the drive belt 20 in Figure 4A. The spacers 35, or the intermediate element 36, in this case according to the invention are preferably made of an elastomeric plastic or plastic composite. An additional advantage of the use of such spacers 35, at any rate in so far as said spacers are provided with a sufficiently large dimension for the purpose in the tangential direction, and in so far as they are made of a sufficiently flexible material, is that the drive belt 20 can bend in that direction, even if the transverse element thickness radially within the tension element 31 is constant.

Figure 4B shows another example of this first embodiment of the principle of the invention. In this example also, a number of spacers 35 are provided in each case between the transverse elements 40, which in this case form part of an intermediate element 36 which fully surrounds the tension element 31. An essential difference from the drive belt 20 of Figure 4A is, however, that the drive belt 20 of Figure 4B is provided with two separate tension elements 31, each surrounded by a corresponding, separate intermediate element 36 with radial protuberances, or the abovementioned spacers 35. Viewed in the front view of Figure 4B, for this purpose the transverse elements 40 of this drive belt 20 are provided with a largely bounded recess 46 both on the left side and on the right side thereof. The recesses 46 here are open in the axial direction towards the abovementioned left and right sides respectively of the transverse element 40 in order to accommodate therein a respective assembly of tension element 31 and intermediate element 36. Compared with the drive belt design of Figure 4A, the design of the drive belt 20 of Figure 4B has the advantage that the latter is easier to manufacture, at any rate is easier to assemble from the individual components thereof.

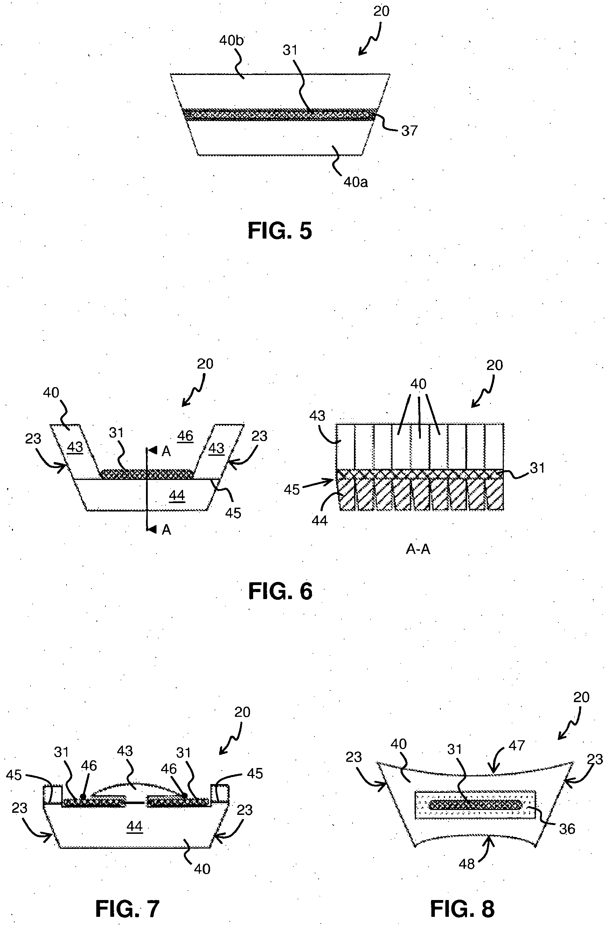

As an alternative to the abovementioned power transmission in the circumferential direction by means of the spacers 35, or at least as an advantageous addition to it, the present invention proposes to fix the tension element 31 on the transverse elements 40, or on the intermediate element 36, by means of an adhesive 37 applied between them. The adhesive 37 preferably fully encloses the tension element 31 here, so that this also forms a corrosion-resistant covering layer. An advantageous simple form of this last embodiment of the drive belt 20 according to the invention, which is illustrated in a tangential cross section in Figure 5, comprises two types of transverse elements 40a and 40b, a first type 40a of which is fixed to the tension element 31 radially inside it, and a second type 40b of which is fixed to the tension element 31 radially outside it.

According to the present invention, it is also possible for no special means at all to be provided for a power transmission in the circumferential direction between the transverse elements 40 and tension element 31. In such a design of the drive belt 20, driving power is transmitted in an essentially known manner, mainly between the pulleys 1, 2, by the fact that the transverse elements 40 push each other along in the circumferential direction over the tension element 31. In this case according to the invention, an upper side 43 of the transverse elements 40 lying radially outside the tension element 31 must be provided with an at any rate virtually constant thickness, while a lower side 44 of the transverse elements 40 lying radially inside the tension element 31 must at any rate effectively taper radially inwards, as shown diagrammatically in the appended Figure 6. A transitional edge 45 between the upper side 43 and the lower side 44 of the transverse elements 40 in this case preferably at any rate virtually coincides with the tension element 31 in the radial direction. As a result of this, both the difference in rotational speed in the circumferential direction between the transverse elements 40 and the tension element 31 and the corresponding frictional forces, or frictional losses, between them are advantageously negligible.

According to the present invention, the transverse elements 40 in each case can define an open space, or recess 46, bounded at least in both axial directions and radially inwards or radially outwards, in which recess the tension element 31 and an intermediate element 36 which may be provided around it is situated, which recess 46 is shown in Figures 4 and 6.

According to the invention, the variant of the transverse element 40 from Figure 4A, in which it bounds the abovementioned recess 46 also in the respective remaining radial direction, is an advantageous simple embodiment of the invention. According to the invention, it is, however, possible to have further alternative embodiments of the transverse element 40 with a recess 46 defined in this way, an example being given in Figure 7, which example corresponds to that of Figure 4B. In this example the transverse element 40 defines two largely bounded recesses 46, a separate tension element 31 being in the two recesses 46 in the drive belt 20. Otherwise in this specific example of the drive belt 20 according to the invention no special means are provided for the abovementioned power transmission in the circumferential direction. On the contrary, the transverse element 40 is in fact provided with the abovementioned transitional edge 45 and with the abovementioned tapering lower side 44.

A circumference of the abovementioned recess 46 determined by the transverse element 40 preferably, however, corresponds at any rate virtually fully with the outer circumference of the cross section of the tension element 31, or the intermediate element 36 provided around it. In particular in this latter case the abovementioned circumference of the recess 46, more particularly its axial width and/or radial height dimension, is chosen so as to be a little smaller than the outer circumference of the intermediate element 36 at the position of said recess 46, at any rate if it is measured outside the recess 46. As a result of this, the intermediate element 36 in the drive belt 20 is at least slightly compressed and clamped by the transverse element 40, which can support the abovementioned power transmission in the circumferential direction.

Furthermore, according to the invention such clamping can also be reinforced by providing the transverse element 40 with an at any rate at least effectively concavely curved upper face 47 and/or lower face 48, namely the boundary faces 47, 48 of the transverse element 40 on its radial inside and outside. Through the concave shape of the boundary faces 47, 48, the clamping force exerted during operation by the pulley sheaves 4, 5 upon the abovementioned running faces 23 of the drive belt 20 results in a force component radially directed towards the tension element 31, under the influence of which said tension element is clamped, which may or may not be by way of an intermediate element 36 possibly placed around it. A transverse element 40 shaped in this way according to the invention is diagrammatically illustrated in Figure 8.

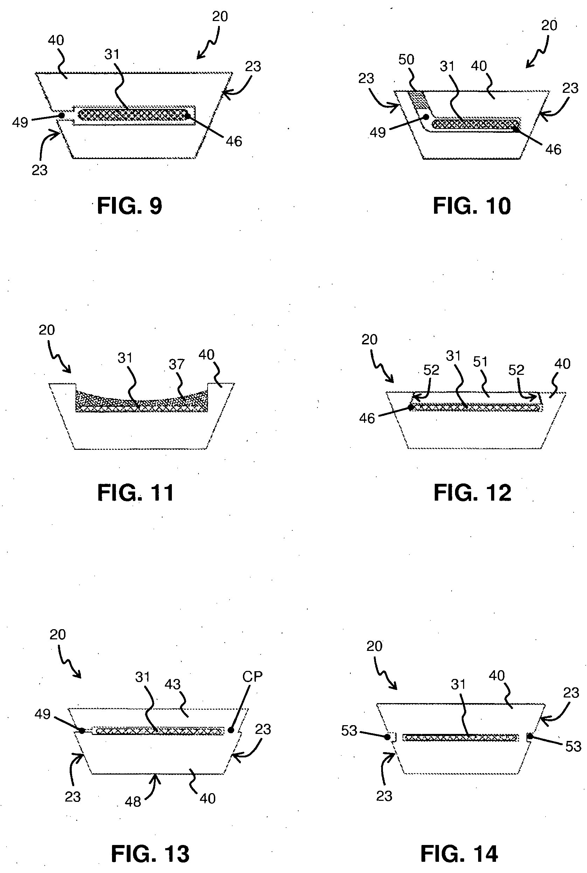

The transverse element 40 according to the invention with a recess 46 virtually fully bounded in the radial and the axial directions, as illustrated, for example, in Figure 4A or Figure 8, can be produced in situ here, i.e. around the tension element 31, for example in an injection moulding process. Otherwise, a gap 49 can be provided between the outer circumference of the transverse element 40 and the abovementioned recess 46 thereof to enable the tension element 31, embedded in the abovementioned intermediate element 36 or otherwise, to be accommodated in the recess 46. An example of the last-mentioned embodiment of the transverse element 40 according to the invention is shown diagrammatically in a front view in Figure 9.

After the tension element 31 has been accommodated in the recess 46 of the transverse element 40, the gap 49 can be closed off, for example by a plug 50 such as that shown diagrammatically in Figure 10. It is also possible to use a hardening liquid filler or adhesive for this, in which case the recess 46 around the tension element 31 is preferably also filled up with it. According to the invention, the abovementioned gap 49 preferably opens onto the radial inside or outside of the transverse element 40, so that said gap is forced shut by the clamping force exerted during operation by the pulley sheaves 4, 5 upon the abovementioned running faces 23 of the drive belt 20.

As an alternative to the transverse element 40 discussed above with a recess 46 which is at any rate at least largely bounded in both axial and radial directions, it is also possible according to the invention simply to close off the recess 46 in the abovementioned respective remaining radial direction at least partly, but possibly even exclusively, by means of a hardened liquid filler 38, preferably with an adhesive action, or a plug 51 suitably shaped for the purpose. An example of the first-mentioned version of the drive belt 20 is shown in Figure 11, and an example of the second possibility is shown in Figure 12.

As shown in Figure 12, it is advantageous according to the invention that the axial end faces 52 of the plug 51 or the filler and clamping faces of the transverse element 40 acting upon them mutually converge in the radial direction, viewed from the abovementioned recess 46. Through the use of this last measure according to the invention, the plug 51 is forced against, or at any rate in the direction of, the tension element 31, under the influence of the clamping force exerted by the pulley sheaves 4, 5 upon the abovementioned running faces 23 of the transverse element 40 during operation.

In particular in the case of the transverse element 40 in which the recess 46 for the tension element 31 is bounded in the radial and the axial directions and in which the abovementioned gap 49 is used, as is illustrated, for example, in Figure 9, it is advantageous according to the present invention if the abovementioned running faces 23 of said transverse element extend in the radial direction no further than to the tension element 31. This measure is illustrated diagrammatically in Figure 13, in which the lateral side faces of the transverse element 40 are set back - axially inwards - at the level of the tension element 31, so that an upper side 43 of the transverse element 40 cannot come into frictional contact with the pulley sheaves 4, 5. By this measure, a part of the transverse element 40 which is susceptible to fracture, indicated in Figure 13 by the letters "CP", will be subjected to a less heavy load, which adds to its robustness, and also to the load-bearing capacity and the service life of the drive belt 20 as a whole.

In addition, according to the invention, the running faces 23 themselves are preferably also provided with recessed or axially inwardly set parts 53, 54, at the position of which the transverse element 40 cannot come into frictional contact with the pulley sheaves 4, 5. In a first further development of this measure, which is illustrated in Figure 14, the abovementioned recessed parts 53, 54 of a running face 23 comprise a substantially tangentially directed groove 53 at the radial level of the tension element 31. In this way possible damage to the transverse element 40 by the effect upon it of the relatively sharp edges of the thin tension element 31 ("cutting in") can be largely avoided in a particularly simple manner.

In a second further development of the abovementioned measure according to the invention, which is illustrated in Figure 15 by means of a side part of a transverse element 40, the abovementioned recessed parts 53, 54 of the running faces 23 comprise a number of radially directed grooves 54. This means, firstly, that the frictional contact of the running face 23 with the pulley sheaves 4, 5 is interrupted in the tangential or running direction of the drive belt 20 and, secondly, that the air cooling of said frictional contact is improved, so that heating of the transverse element 40 as a result of such frictional contact can be advantageously limited. This last aspect of the invention is important because of the generally limited and, at least in the drive belt application, critical temperature stability of plastics.

According to the invention, the transverse elements 40 are preferably provided with a reinforcing element 55 in order to increase their axial rigidity, for example in the form of a substantially cylindrical transverse pin 55, which is embedded in the material of the transverse element 40. Figure 16 shows such an embodiment of the transverse element 40 in an axially oriented cross section of the drive belt 20 according to Figure 6 above. In this case the reinforcing element 55 is preferably situated radially inside the tension element 31. The reinforcing element 55, more particularly an axial end of said reinforcing element, can be intended for frictional contact with the pulley sheaves 4, 5 here, the reinforcing element 55 extending over the full axial width of the transverse element 40 in said transverse element. If the reinforcing element 55 is made of metal here, at least the abovementioned axial ends of it can be provided with a covering layer.

The invention also relates to a drive belt 20 with transverse elements 40 in which a geometric angle α between the running faces 23 thereof is greater than a geometric angle defined between the pulley sheaves 4, 5 of a pulley 1, 2. Through the use of this measure, the distribution of the contact pressure between the drive belt 20 and the pulleys 1, 2 is advantageously influenced during operation, in particular where the transverse element 40 is made of plastic with a recess 46 which is open on its radial outside, in other words in the direction not bounded by the transverse element 40 itself, like, for example, the transverse element 40 of Figure 6 or Figure 11 above.

Finally, the invention relates to a drive belt 20 with transverse elements 40 in which a geometric angle α₁, α₂ between the running faces 23 thereof increases radially outwards, as illustrated in Figure 18. Through the use of this measure, the contact pressure between the drive belt 20 and the pulleys 1, 2 is advantageously distributed more uniformly during operation, in particular where the transverse element 40 is made of plastic with a recess 46 which is open on its radial outside, in other words in the direction not bounded by the transverse element 40 itself, like, for example, the transverse element 40 of Figure 6 or Figure 11 above.

## Claims

1. A drive belt (20) which is flexible in the circumferential direction for the transmission of mechanical power between two rotating pulleys (1, 2), which drive belt (20) is provided with a tension element (31) and with a number of transverse elements (40) which are provided on said tension element and have two largely axially directed, mutually radially outwardly diverging side faces (23) intended for frictional contact with the pulleys (1, 2), wherein the tension element (31) comprises a flat, thin ring which is self-contained in the circumferential direction of the drive belt (20), **characterized in that**, the tension element (31) is provided with a corrosion-resistant covering layer, such as a metal oxide skin, a DLC (diamond-like carbon) coating or a Teflon coating.

2. Drive belt (20) according to Claim 1, **characterized in that** the tension element (31) is formed by one or two single rings that are made of a metal, preferably an iron alloy, such as spring steel or maraging steel.

3. Drive belt (20) according to Claim 1 or 2, **characterized in that** a radially directed main side of a tension element (31) is provided with one or more grooves, preferably substantially axially directed grooves.

4. Drive belt (20) according to Claim 1, 2 or 3, **characterized in that** a spacer (35) made of an elastomeric plastic or plastic composite is provided in the circumferential direction of the drive belt (20) between two transverse elements (40), preferably between all adjacent transverse elements (40, 401, 402).

5. Drive belt (20) according to Claim 4, **characterized in that** the spacer (35) is fitted around the tension element (31), at any rate viewed in a cross section thereof and **in that** the spacer (35) is part of an intermediate element (36) which completely surrounds, i.e. encloses, the tension element (31), and **in that** the spacer (35) is formed as a local radial protuberance or thickening of the intermediate element (36).

6. Drive belt (20) according to one or more of the preceding claims, **characterized in that** the transverse elements (40) are fixed to the tension element (31) by means of an adhesive (37) applied between them, which adhesive (37) also forms the said covering layer.

7. Drive belt (20) according to one or more of the preceding claims, **characterized in that**:
- an upper side (43) of the transverse elements (40) lying radially outside the tension element (31) is provided with an at any rate virtually constant dimension in the circumferential direction, i.e. a constant thickness;
- a lower side (44) of the transverse elements (40) lying radially inside the tension element (31) at any rate effectively tapers radially inwards;
- the transverse elements (40) are fitted on the tension element (31) so as to be movable around its circumference, and **in that**
- the transverse elements (40) are provided with a transitional edge (45) on a main face (41, 42) thereof between the abovementioned upper side (43) and the abovementioned lower side (44), which transitional edge, viewed in the radial direction, at any rate at least virtually coincides with a radial position of the tension element (31).

8. Drive belt (20) according to one or more of the preceding claims, **characterized in that**:
- the transverse element (40) defines an open space or recess (46), in which the tension element (31) is accommodated, the recess (46) being bounded at least in both axial directions and radially inwards or radially outwards;
- the transverse element (40) bounds the abovementioned recess (46) at least partially also in the respective remaining radial direction;
- the tension element (31) is surrounded by an intermediate element (36) and **in that**
- an axial, width dimension and/or a radial height dimension of the abovementioned recess (46) is/are less than those of the outer circumference of the cross section of the intermediate element (36) at the position of the transverse element (40), at any rate if measured separately from the transverse element (40), and at least equal to or greater than the respective dimension(s) of the outer circumference of the cross section of the tension element (31).

9. Drive belt (20) according to Claim 8, **characterized in that** the transverse element (40) is provided with a gap (49) between its outer circumference and the abovementioned recess (46) in order to enable the tension element (31) to be accommodated in the abovementioned space and **in that** the gap (49) is either filled up with a plug (50, 51), a hardened liquid filler (38) or an adhesive (37) or is provided on the radial inside or outside of the transverse element (40) such that it is forced shut by the forces exerted by the pulleys (1, 2) upon the transverse element (40) during operation of the drive belt (20).

10. Drive belt (20) according to one or more of the preceding claims, **characterized in that**:
- the transverse element (40) defines an open space or recess (46), in which the tension element (31) is accommodated, the recess (46) being bounded at least in both axial directions and radially inwards or radially outwards;
- the transverse element (40) bounds the abovementioned recess (46) at least partially also in the respective remaining radial direction; and **in that**
- the recess (46) is closed off in the respective remaining radial direction by a plug (50, 51), a hardened liquid filler (38) or an adhesive (37).

11. Drive belt (20) according to Claim 10, **characterized in that** the axial end faces (52) of the plug (50, 51) or the filler (38) and clamping faces of the transverse element (40) acting upon them mutually converge in the radial direction, viewed from the abovementioned recess (46).

12. Drive belt (20) according to one or more of the preceding claims, **characterized in that** boundary faces (47, 48) of the transverse element (40) are at any rate at least effectively concavely curved on the radial inside and outside thereof, namely an upper face (47) and a lower face (48) thereof.

13. Drive belt (20) according to one or more of the preceding claims, **characterized in that** a geometric angle between the side faces (23) of a transverse element (40) increases radially outwards.

14. Drive belt (20) according to one or more of the preceding claims, **characterized in that** the side faces (23) of a transverse element (40), intended for frictional contact with the pulleys (1, 2), comprise recessed parts (53; 54), at the position of which the running face does not come into contact with the pulley sheaves of the pulleys (1, 2), which comprise one or more tangentially directed grooves (53) provided in the side face (23) at the radial height of the tension element (31), or which comprise a number of radially directed grooves (54).

15. Drive belt (20) according to one or more of the preceding claims, **characterized in that** a transverse element (40) is provided with a reinforcing element (55) in order to increase its axial rigidity and **in that** the reinforcing element (55) is situated radially inside the tension element (31).

16. Drive belt (20) according to Claim 15, **characterized in that** the reinforcing element (55) covers the full axial width of the transverse element (40), is intended for frictional contact with the pulley sheaves of the pulleys (1, 2) and preferably is made of a cylindrical transverse metal pin (55), possibly provided with a covering layer.

## Patentansprüche

1. Antriebsriemen (20), der in Umfangsrichtung für die Übertragung von mechanischer Energie zwischen zwei sich drehenden Flaschenzügen (1, 2) flexibel ist, wobei der Riemenscheiben (20) mit einem Spannelement (31) und mit einer Anzahl von Querelementen (40) bereitgestellt ist, die auf dem Spannelement bereitgestellt sind und zwei große, axial ausgerichtete, zueinander radial auswärts divergierende Seitenflächen (23) aufweist, die einen Reibungskontakt mit den Riemenscheiben (1, 2) eingehen sollen, wobei das Spannelement (31) einen flachen dünnen Ring umfasst, der in Umfangsrichtung des Antriebsriemens (20) selbsttragend ist, **dadurch gekennzeichnet, dass** das Spannelement (31) mit einer korrosionsbeständigen Abdeckschicht bereitgestellt ist, wie z. B. einer Metalloxidhaut, einer DLC-Beschichtung (diamantartiger Kohlenstoff) oder einer TeflonBeschichtung.

2. Antriebsriemen (20) nach Anspruch 1, **dadurch gekennzeichnet, dass** das Spannelement (31) von einem oder zwei einzelnen Ringen ausgebildet ist, die aus einem Metall hergestellt sind, vorzugsweise einer Eisenlegierung wie z. B. Federstahl oder Maraging-Stahl.

3. Antriebsriemen (20) nach Anspruch 1 oder 2, **dadurch gekennzeichnet, dass** eine radial ausgerichtete Hauptseite eines Spannelements (31) mit einer oder mehreren Rillen bereitgestellt ist, vorzugsweise mit im Wesentlichen axial ausgerichteten Rillen.

4. Antriebsriemen (20) nach Anspruch 1, 2 oder 3, **dadurch gekennzeichnet, dass** ein Abstandshalter (35) aus einem elastomeren Kunststoff oder Kunststoff-Verbundstoff in Umfangsrichtung des Antriebsriemens (20) zwischen zwei Querelementen (40) bereitgestellt ist, vorzugsweise zwischen allen benachbarten Querelementen (40, 401, 402).

5. Antriebsriemen (20) nach Anspruch 4, **dadurch gekennzeichnet, dass** der Abstandshalter (35) in jedem Fall im Querschnitt davon betrachtet um das Spannelement (31) angebracht ist, und dadurch, dass der Abstandshalter (35) Teil eines Zwischenelements (36) ist, welches das Spannelement (31) vollständig umgibt, d. h. einschließt, und dadurch, dass der Abstandshalter (35) aus einer lokalen radialen Ausstülpung oder Verdickung des Zwischenelements (36) ausgebildet ist.

6. Antriebsriemen (20) nach einem oder mehreren der vorhergehenden Ansprüche, **dadurch gekennzeichnet, dass** die Querelemente (40) am Spannelement (31) mittels eines Klebstoffs (37) befestigt sind, der dazwischen aufgetragen wird, wobei der Klebstoff (37) auch die Abdeckschicht bildet.

7. Antriebsriemen (20) nach einem der vorhergehenden Ansprüche, **dadurch gekennzeichnet, dass**:
- eine obere Seite (43) der Querelemente (40), die radial außerhalb des Spannelements (31) liegt, in jedem Fall mit einer virtuell konstanten Abmessung in Umfangsrichtung bereitgestellt ist, d. h. einer konstanten Dicke;
- eine untere Seite (44) der Querelemente (40) radial innerhalb des Spannelements (31) liegt und sich in jedem Fall effektiv radial nach innen verjüngt;
- die Querelemente (40) am Spannelement (31) angebracht sind, um so um ihren Umfang beweglich zu sein, und dadurch, dass
- die Querelemente (40) mit einer Übergangskante (45) an einer Hauptfläche (41, 42) davon zwischen der oberen Seite (43) und der unteren Seite (44) bereitgestellt sind, wobei die Übergangskante, in radialer Richtung betrachtet, in jedem Fall mindestens virtuell einer radialen Position des Spannelements (31) entspricht.

8. Antriebsriemen (20) nach einem der vorhergehenden Ansprüche, **dadurch gekennzeichnet, dass**:
- das Querelement (40) einen offenen Raum oder eine Aussparung (46) definiert, in der das Spannelement (31) aufgenommen ist, wobei die Aussparung (46) mindestens in beiden axialen Richtungen und radial einwärts oder radial auswärts begrenzt ist;
- wobei das Querelement (40) die Aussparung (46) mindestens teilweise auch in der jeweiligen restlichen radialen Richtung begrenzt;
- das Spannelement (31) von einem Zwischenelement (36) umgeben ist, und dadurch, dass
- eine axiale Breitenabmessung und/oder eine radiale Höhenabmessung der Aussparung (46) geringer ist/sind, als die des Außenumfangs des Querschnitts des Zwischenelements (36) an der Position des Querlements (40), jedenfalls wenn separat von dem Querelement (40) gemessen, und mindestens gleich oder größer als die jeweilige(n) Abmessung(en) des Außenumfangs des Querschnitts des Spannelements (31) ist/sind.

9. Antriebsriemen (20) nach Anspruch 8, **dadurch gekennzeichnet, dass** das Querelement (40) mit einem Spalt (49) zwischen seinem Außenumfang und der Aussparung (46) bereitgestellt ist, damit das Spannelement (31) in dem Raum aufgenommen werden kann, und dadurch, dass der Spalt (49) entweder mit einem Stopfen (50, 51), einem ausgehärteten flüssigen Füllstoff (38) oder einem Klebstoff (37) gefüllt ist oder auf der radialen Innenseite oder Außenseite des Querelements (40) bereitgestellt ist, sodass dieser von den Kräften geschlossen wird, die von den Riemenscheiben (1, 2) auf das Querelement (40) während des Betriebs des Antriebsriemens (20) ausgeübt werden.

10. Antriebsriemen (20) nach einem der vorhergehenden Ansprüche, **dadurch gekennzeichnet, dass**:
- das Querelement (40) einen offenen Raum oder eine Aussparung (46) definiert, in der das Spannelement (31) aufgenommen ist, wobei die Aussparung (46) mindestens in beiden axialen Richtungen und radial einwärts oder radial auswärts begrenzt ist;
- das Querelement (40) die Aussparung (46) mindestens teilweise auch in der jeweiligen restlichen radialen Richtung begrenzt; und dadurch, dass
- die Aussparung (46) in der jeweiligen restlichen radialen Richtung von einem Stopfen (50, 51), einem ausgehärteten flüssigen Füllstoff (38) oder einem Klebstoff (37) verschlossen wird.

11. Antriebsriemen (20) nach Anspruch 10, **dadurch gekennzeichnet, dass** die axialen Endflächen (52) des Stopfens (50, 51) oder des Füllstoffes (38) und die Klemmflächen des Querelements (40), die darauf einwirken, jeweils in radialer Richtung auseinander laufen, wenn von der Aussparung (46) aus betrachtet.

12. Antriebsriemen (20) nach einem oder mehreren der vorhergehenden Ansprüche, **dadurch gekennzeichnet, dass** die Begrenzungsflächen (47, 48) des Querelements (40) in jedem Fall mindestens effektiv konkav auf der radialen Innenseite und Außenseite davon gekrümmt sind, nämlich auf einer oberen Fläche (47) und einer unteren Fläche (48) davon.

13. Antriebsriemen (20) nach einem oder mehreren der vorhergehenden Ansprüche, **dadurch gekennzeichnet, dass** ein geometrischer Winkel zwischen den Seitenflächen (23) eines Querelements (40) radial nach außen zunimmt.

14. Antriebsriemen (20) nach einem oder mehreren der vorhergehenden Ansprüche, **dadurch gekennzeichnet, dass** die Seitenflächen (23) eines Querelements (40), das mit den Riemenscheiben (1, 2) in Reibungskontakt treten soll, ausgesparte Teile (53; 54) umfasst, an deren Position die laufende Fläche nicht in Kontakt mit den Treibriemenscheiben der Riemenscheiben (1, 2) in Kontakt tritt, die eine oder mehrere tangential ausgerichtete Rillen (53) umfassen, die in der Seitenfläche (23) an der radialen Höhe des Spannelements (31) bereitgestellt sind oder eine Reihe von radial ausgerichteten Rillen (54) umfassen.

15. Antriebsriemen (20) nach einem oder mehreren der vorhergehenden Ansprüche, **dadurch gekennzeichnet, dass** ein Querelement (40) mit einem Verstärkungselement (55) bereitgestellt ist, um die axiale Steifigkeit zu erhöhen, und dadurch, dass das Verstärkungselement (55) radial innerhalb des Spannelements (31) angeordnet ist.

16. Antriebsriemen (20) nach Anspruch 15, **dadurch gekennzeichnet, dass** das Verstärkungselement (55) die vollständige axiale Breite des Querelements (40) abdeckt und für den Reibungskontakt mit den Treibriemenscheiben der Riemenscheiben (1, 2) ausgelegt ist und vorzugsweise aus einem zylindrisch quer verlaufenden Metallstift (55) hergestellt ist, der möglicherweise mit einer Abdeckschicht bereitgestellt ist.

## Revendications

1. Courroie de transmission (20) qui est flexible dans la direction de la circonférence pour transmettre une puissance mécanique entre deux poulies rotatives (1, 2), laquelle courroie de transmission (20) est dotée d'un élément de tension (31) et d'un certain nombre d'éléments transversaux (40) qui sont disposés sur ledit élément de tension et comportent deux faces latérales (23) orientées en gros axialement, divergeant radialement vers l'extérieur l'une par rapport à l'autre et servant à un contact de friction avec les poulies (1, 2), dans lequel l'élément de tension (31) comprend un anneau mince, plat qui est indépendant dans la direction de la circonférence de la courroie de transmission (20), **caractérisée en ce que** l'élément de tension (31) est pourvu d'une couche de couverture résistante à la corrosion, telle qu'une peau d'oxyde métallique, un revêtement de CDA (carbone sous forme de diamant amorphe) ou un revêtement en téflon.

2. Courroie de transmission (20) selon la revendication 1, **caractérisée en ce que** l'élément de tension (31) est constitué d'un ou deux anneaux individuels qui sont faits d'un métal, de préférence un alliage ferreux, tel qu'un acier à ressort ou un acier maraging.

3. Courroie de transmission (20) selon la revendication 1 ou 2, **caractérisée en ce qu'**un côté principal orienté radialement d'un élément de tension (31) est pourvu d'une ou plusieurs rainures, de préférence des rainures orientées sensiblement axialement.

4. Courroie de transmission (20) selon la revendication 1, 2 ou 3, **caractérisée en ce qu'**une entretoise (35) faite d'un plastique élastomère ou d'un composite plastique est disposée dans la direction de la circonférence de la courroie de transmission (20) entre deux éléments transversaux (40), de préférence entre tous les éléments transversaux (40, 401, 402) adjacents.

5. Courroie de transmission (20) selon la revendication 4, **caractérisée en ce que** l'entretoise (35) est montée autour de l'élément de tension (31), de toute façon vue dans une coupe transversale de celle-là, **en ce que** l'entretoise (35) fait partie d'un élément intermédiaire (36) qui entoure complètement, c.-à-d. ceinture, l'élément de tension (31) et **en ce que** l'entretoise (35) est formée comme une protubérance radiale locale ou un épaississement de l'élément intermédiaire (36).

6. Courroie de transmission (20) selon une ou plusieurs des revendications précédentes, **caractérisée en ce que** les éléments transversaux (40) sont fixés à l'élément de tension (31) au moyen d'un adhésif (37) appliqué entre eux, lequel adhésif (37) constitue aussi ladite couche de couverture.

7. Courroie de transmission (20) selon une ou plusieurs des revendications précédentes, **caractérisée en ce que** :
- un côté supérieur (43) des éléments transversaux (40) se trouvant radialement à l'extérieur de l'élément de tension (31) est doté d'une dimension de toute façon quasiment constante dans la direction de la circonférence, c.-à-d. d'une épaisseur constante ;
- un côté inférieur (44) des éléments transversaux (40) se trouvant radialement à l'intérieur de l'élément de tension (31) s'effile de toute façon effectivement radialement vers l'intérieur ;
- les éléments transversaux (40) sont montés sur l'élément de tension (31) de façon à être mobiles autour de sa circonférence,
et **en ce que**
- les éléments transversaux (40) sont pourvus d'un bord de transition (45) sur la face principale (41, 42) de ceux-ci entre le côté supérieur (43) susmentionné et le côté inférieur (44) susmentionné, lequel bord de transition, vu dans la direction radiale, coïncide de toute façon au moins virtuellement avec la position radiale de l'élément de tension (31).

8. Courroie de transmission (20) selon une ou plusieurs des revendications précédentes, **caractérisée en ce que** :
- l'élément transversal (40) délimite un espace ouvert ou évidement (46), dans lequel est logé l'élément de tension (31), l'évidement (46) étant limité au moins dans les deux directions axiales et radialement vers l'intérieur ou radialement vers l'extérieur ;
- l'élément transversal (40) limite l'évidement (46) susmentionné au moins en partie aussi dans la direction radiale restante correspondante ;
- l'élément de tension (31) est entouré par un élément intermédiaire (36),
et **en ce que**
- la dimension de largeur axiale et/ou la dimension de hauteur radiale de l'évidement (46) susmentionné est/sont inférieure(s) à celles de la circonférence extérieure de la coupe transversale de l'élément intermédiaire (36) au niveau de la position de l'élément transversal (40), de toute façon si on la mesure séparément de l'élément transversal (40), et supérieure(s) ou égale(s) à la/aux dimension(s) correspondante (s) de la circonférence extérieure de la coupe transversale de l'élément de tension (31).

9. Courroie de transmission (20) selon la revendication 8, **caractérisée en ce que** l'élément transversal (40) est pourvu d'un interstice (49) entre sa circonférence extérieure et l'évidement (46) susmentionné afin de permettre de loger l'élément de tension (31) dans l'espace susmentionné et **en ce que** l'interstice (49) soit est bouché avec un bouchon (50, 51), un liquide de remplissage (38) durci ou un adhésif (37) soit est disposé sur l'intérieur ou l'extérieur radial de l'élément transversal (40) de telle sorte que les forces qu'exercent les poulies (1, 2) sur l'élément transversal (40) pendant le fonctionnement de la courroie de transmission (20) forcent ledit interstice à se fermer.

10. Courroie de transmission (20) selon une ou plusieurs des revendications précédentes, **caractérisée en ce que** :
- l'élément transversal (40) délimite un espace ouvert ou évidement (46), dans lequel est logé l'élément de tension (31), l'évidement (46) étant limité au moins dans les deux directions axiales et radialement vers l'intérieur ou radialement vers l'extérieur ;
- l'élément transversal (40) limite l'évidement (46) susmentionné au moins en partie aussi dans la direction radiale restante correspondante,
et **en ce que**
- l'évidement (46) est fermé dans la direction radiale restante correspondante avec un bouchon (50, 51), un liquide de remplissage (38) durci ou un adhésif (37).

11. Courroie de transmission (20) selon la revendication 10, **caractérisée en ce que** les faces terminales axiales (52) du bouchon (50, 51) ou de la matière de remplissage (38) et les faces de serrage de l'élément transversal (40) agissant sur elles convergent les unes vers les autres dans la direction radiale, en vue depuis l'évidement (46) susmentionné.

12. Courroie de transmission (20) selon une ou plusieurs des revendications précédentes, **caractérisée en ce que** des surfaces limites (47, 48) de l'élément transversal (40) sont de toute façon au moins effectivement courbées concaves sur l'intérieur et l'extérieur radiaux de celui-ci, à savoir une face supérieure (47) et une face inférieure (48) de celui-ci.

13. Courroie de transmission (20) selon une ou plusieurs des revendications précédentes, **caractérisée en ce que** l'angle géométrique entre les faces latérales (23) d'un élément transversal (40) augmente radialement vers l'extérieur.

14. Courroie de transmission (20) selon une ou plusieurs des revendications précédentes, **caractérisée en ce que** les faces latérales (23) d'un élément transversal (40), servant à un contact de friction avec les poulies (1, 2), comprennent des parties en creux (53, 54), au niveau desquelles la surface opérationnelle n'entre pas en contact avec les demi-poulies des poulies (1, 2) et qui comprennent une ou plusieurs rainures (53) orientées tangentiellement et disposées dans la face latérale (23) au niveau de la hauteur radiale de l'élément de tension (31) ou qui comprennent un certain nombre de rainures (54) orientées radialement.

15. Courroie de transmission (20) selon une ou plusieurs des revendications précédentes, **caractérisée en ce qu'**un élément transversal (40) est pourvu d'un élément de renfort (55) afin d'augmenter sa rigidité axiale et **en ce que** l'élément de renfort (55) est situé radialement à l'intérieur de l'élément de tension (31).

16. Courroie de transmission (20) selon la revendication 15, **caractérisée en ce que** l'élément de renfort (55) couvre toute la largeur axiale de l'élément transversal (40), sert à un contact de friction avec les demi-poulies des poulies (1, 2) et est constitué de préférence d'une broche métallique (55) cylindrique transversale, éventuellement pourvue d'une couche de couverture.
